# EUROPÄISCHE PATENTANMELDUNG

(11) **EP 4 040 246 A1**
(43) Veröffentlichungstag der Anmeldung: **10.08.2022**
(21) Anmeldenummer: 21156062.8
(22) Anmeldetag: 09.02.2021
(51) Int. Cl.: G05B 19/418

(54) **INVERSE ERWEITERTE REALITÄT FÜR EINE ENGINEERINGVORRICHTUNG**

(71) Anmelder: Siemens Aktiengesellschaft, 80333 München (DE)
(72) Erfinder: Bartholdt, Jörg, 81737 München (DE); Mittermeier, Ludwig Andreas, 81541 München (DE)

(57) **Zusammenfassung**

Die Erfindung gibt ein Verfahren zur Aktualisierung von Daten einer Engineeringvorrichtung (1) einer industriellen Anlage an, wobei durch mindestens eine Sensoreinheit (3) eines mobiles Endgeräts (2) berührungslos Informationen (4) von und über die industrielle Anlage erfasst werden und mittels einer Copy & Paste Operation (C & P) die Informationen (4) und/oder die durch das mobile Endgerät (2) aufbereitete Informationen von dem mobilen Endgerät (2) zu der Engineeringvorrichtung (1) übertragen werden, wobei die Engineeringvorrichtung (1) in einem Zustand versetzt ist, der das logische Ziel der Informationen (4) der Copy & Paste Operation (C & P) bestimmt und wobei die Informationen (4) und/oder aufbereiteten Informationen derart ausgebildet sind, dass sie in die Daten einpflegbar sind.

Ein zugehöriges System wird ebenfalls angegeben.

## Beschreibung

### GEBIET DER ERFINDUNG

Die Erfindung betrifft ein Verfahren und ein System zur Aktualisierung von Daten, beispielweise einer Datenbank, einer Engineeringvorrichtung einer industriellen Anlage, wie beispielsweise einer Produktionsanlage oder einem Kraftwerk. Das der Erfindung zu Grunde liegende Problem ist die Diskrepanz zwischen Informationen in industriellen Engineering- und Simulationsvorrichtungen und den tatsächlichen Gegebenheiten in industriellen Anlagen (auch als Industrieanlagen bezeichenbar) .

### HINTERGRUND DER ERFINDUNG

Unter Engineeringvorrichtung wird im Kontext dieser Patentanmeldung eine computergestützte Vorrichtung zur Planung, Konstruktion, Simulation und Verwaltung einer industriellen Anlage und ihrer Komponenten, wie beispielsweise eine Fertigungsanlage, eine Kläranlage oder gar ein ganzes Kraftwerk, verstanden. Komponenten sind zum Beispiel Motoren, Pumpen, Schaltschränke, Steuervorrichtungen, etc. aber auch passive Objekte wie Rohre und Leitungen.

Bei bereits bestehenden älteren industriellen Anlagen sind oftmals keine Daten in Engineering- und Simulationsvorrichtungen vorhanden, bzw. schwer bis gar nicht maschinell verarbeitbar, wie z.B. als PDF-Ausleitung einer Diagrammdarstellung. Neuere industrielle Anlagen werden typischerweise erst in einer Engineering- und Simulationsvorrichtung konzipiert, optimiert und erst anschließend erstellt. Doch auch hier besteht das Problem, dass es immer wieder zu Diskrepanzen kommt, da es sich dabei in der Regel um ein reines "Vorwärts-Engineering" handelt.

Insbesondere Änderungen, die in späteren Phasen des Betreibers der Anlage getätigt werden (z.B. eine intendierte Pumpe ist nicht lieferbar, wird durch ein anderes Modell ersetzt), werden häufig nicht in den Engineering- und Simulationsvorrichtungen entsprechend nachgepflegt und berücksichtigt. Entsprechend verhält es sich auch im Laufe der Betriebszeit der industriellen Anlage, wenn einzelne Komponenten ad hoc ausgetauscht werden.

Bisher wurde dieses Problem auf folgende Art und Weise gelöst. Für bestehende, ältere industrielle Anlagen (brown field) wird folgendermaßen vorgegangen: Nach einer Analyse einer Industrieanlage werden durch manuelle Arbeit die Daten in Engineering- und Simulationsumgebungen erstellt. Dies ist jedoch eine aufwändige, mühsame und fehleranfällige Tätigkeit. Teilweise können vorhandene Pläne (z.B. in Form von Papier oder PDF) zur Hilfe genommen werden, müssen jedoch mit den Gegebenheiten der tatsächlichen Industrieanlage verglichen und überprüft werden.

Für neuere Anlagen (green field) wird wie folgt vorgegangen: In sinnvollen Zeitabständen bzw. beim Auftreten von Diskrepanzen müssen die Daten in Engineering- und Simulationsumgebungen mit den Gegebenheiten der Industrieanlage verglichen und ggfs. korrigiert werden. Auch dies ist eine mühsame und fehleranfällige Tätigkeit, auch wenn hier weniger Arbeit als bei älteren, bestehenden industriellen Anlagen anfällt.

### ZUSAMMENFASSUNG DER ERFINDUNG

Es ist Aufgabe der Erfindung, eine Lösung anzugeben, mit Hilfe derer eine Aktualisierung von Engineering- und Simulationsumgebungen einer industriellen Anlage vereinfacht wird.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung betrifft ein Verfahren, nach dem mit einem mobilen Endgerät (zum Beispiel Smartphone oder Tablet) mit Sensoren (wie beispielsweise Bild, Video, präzise Orts- und Lageinformationen, Temperatur, Abstand zu Bildelementen, Staub, Feuchtigkeit, Luft-Undichtigkeit) Informationen von einer Industrieanlage aufgenommen werden und mithilfe einer Copy & Paste Operation in eine Engineering- und Simulationsvorrichtung übertragen werden.

Ein wesentlicher Aspekt der Erfindung ist die Copy & Paste Operation von Sensorinformationen, die von dem mobilen Endgerät von der Industrieanlage in die Engineering- und Simulationsvorrichtung aufgenommen werden.

Bei der Copy & Paste Operation handelt es sich um das Mapping der vom mobilen Endgerät aufgenommen Informationen und den in der Engineeringvorrichtung vorhandenen Modelldaten. Die notwendigen Mapping-Informationen werden aus den Sensoraufnahmen am mobilen Endgerät (z.B. 2D-Aufnahmen einer Wärmebildkamera) über Algorithmen (Maschine-Learning-basiert oder klassisch) extrahiert, und zwar die Informationen, die ein Auffinden der entsprechenden Komponenten im Engineering bzw. Simulationsmodell ermöglichen. Das kann z.B. anhand der Lokation (GPS-Koordinaten, InRoom-Koordinaten), Bauformerkennung, Verbindungen zu Nachbarkomponenten, Erkennen von Metallschildern oder EAN-Codes auf Maschinen erfolgen.

Daraus ergeben sich u.a. folgende Vorteile:
- Ohne fehleranfällige und mühsame manuelle Arbeit ist es möglich, präzise und zuverlässige Daten zu Industrieanlagen in Engineering- und Simulationsvorrichtungen zu erstellen (brown field)
- Ohne fehleranfällige und mühsame manuelle Arbeit ist es möglich, Daten in Engineering- und Simulationsvorrichtungen mit den tatsächlichen Gegebenheiten einer Industrieanlage abzugleichen (green field)
- Zertifizierungen und Audits werden erleichtert

Die Erfindung beansprucht ein Verfahren zur Aktualisierung von Daten einer Engineeringvorrichtung einer industriellen Anlage, wobei durch mindestens eine Sensoreinheit eines mobiles Endgeräts berührungslos Informationen von und über die industrielle Anlage erfasst werden und mittels einer Copy & Paste Operation die Informationen und/oder die durch das mobile Endgerät aufbereitete Informationen von dem mobilen Endgerät zu der Engineeringvorrichtung übertragen werden, wobei die Engineeringvorrichtung in einem Zustand versetzt ist, der das logische Ziel der Informationen der Copy & Paste Operation bestimmt und wobei die Informationen und/oder aufbereiteten Informationen derart ausgebildet sind, dass sie in die Daten einpflegbar sind.

Die Erfindung bietet den Vorteil, dass eine Aktualisierung von Engineering- und Simulationsumgebungen einer industriellen Anlage einfach und robust ermöglicht wird.

In einer Weiterbildung werden die Informationen und/oder die aufbereiteten Informationen in der Engineeringvorrichtung ausgewertet, analysiert und werden mit in der Datenbank vorhandenen weiteren Informationen korreliert.

In einer weiteren Ausführungsform werden die weiteren Informationen zumindest teilweiseaus aus einem Drittsystem bereitgestellt sind.

In einer weiteren Ausbildung wird durch die Engineeringvorrichtung aus den Informationen und/oder aufbereiteten Informationen ein digitales Abbild der industriellen Anlage erzeugt.

In einer weiteren Ausführungsform wird die Engineeringvorrichtung dem mobilen Endgerät übermitteln, welche Informationen der industriellen Anlage noch fehlen oder nicht hinreichend genau vorhanden sind.

Dadurch ist es möglich, die aufgenommenen Sensordaten des Endgerätes an die Engineeringvorrichtung zu übertragen, dass aber auch zuvor Informationen von dem Engineering/Simu-Tool an das Endgeräte erfolgen kann, z.B. um den Kontext zu setzen bzw. die Erkennung von unbekannten Komponenten erleichtern, weil die Nachbarkomponenten noch mit dem Plan übereinstimmen, bzw. tatsächlich fehlende Informationen genannt werden, so dass der Mitarbeiter bei der Sensoraufnahmen auch gezielt gesteuert werden kann, z.B. wo er Fotos machen soll, um so effizient die Arbeitszeit zu nutzen.

In einer weiteren Ausgestaltung kann das Aufbereiten der Informationen in dem mobilen Endgerät durch eine künstliche Intelligenz erfolgen.

Die Erfindung beansprucht auch ein System mit einer Engineeringvorrichtung einer industriellen Anlage, aufweisend:
- ein mobiles Endgerät mit mindestens eine Sensoreinheit, die eingerichtet ist, berührungslos Informationen von und über die industrielle Anlage zu erfassen,
- wobei das mobile Endgerät eingerichtet ist, mittels einer Copy & Paste Operation die Informationen und/oder die durch das mobile Endgerät aufbereitete Informationen von dem mobilen Endgerät zu der Engineeringvorrichtung zu übertragen,
- wobei die Engineeringvorrichtung eingerichtet ist, in einem Zustand versetzt zu werden, der das logische Ziel der Informationen der Copy & Paste Operation bestimmt, und
- wobei die Informationen und/oder aufbereiteten Informationen derart ausgebildet sind, dass sie in Daten einpflegbar sind.

In einer weiteren ,Ausbildung kann die Engineeringvorrichtung eingerichtet sein, die Informationen auszuwerten, zu analysieren und mit in den Daten vorhandenen weiteren Informationen zu korrelieren. Die Daten können in einer Datenbank abgelegt sein.

In einer weiteren Ausführungsform können die weiteren Informationen zumindest teilweiseaus aus einem Drittsystem bereitstellbar sein.

In einer weiteren Ausprägung kann die Engineeringvorrichtung eingerichtet sein, aus den Informationen und/oder den aufbereiteten Informationen ein digitales Abbild der industriellen Anlage zu erzeugen.

In einer weiteren Ausführungsform kann die Engineeringvorrichtung eingerichtet sein, dem mobilen Endgerät zu übermitteln, welche Informationen der industriellen Anlage noch fehlen oder nicht hinreichend genau vorhanden sind.

In einer weiteren Ausbildung kann das mobile Endgerät ein Smartphone oder ein Tablet Computer sein und die Sensoreinheit kann eingerichtet sein, Bild, Video, Orts- und Lageinformationen, Temperatur, Abstände, Staubkonzentration, Feuchtigkeit oder Luft-Undichtigkeit aufzunehmen.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
FIG. 1 ein Blockschaltbild eines Systems mit einer Engineeringvorrichtung und,
FIG. 2 ein Ablaufdiagramm eines Verfahrens zur Aktualisierung einer Engineeringvorrichtung.

### DETAILLIERTE BESCHREIBUNG DER ERFINDUNG

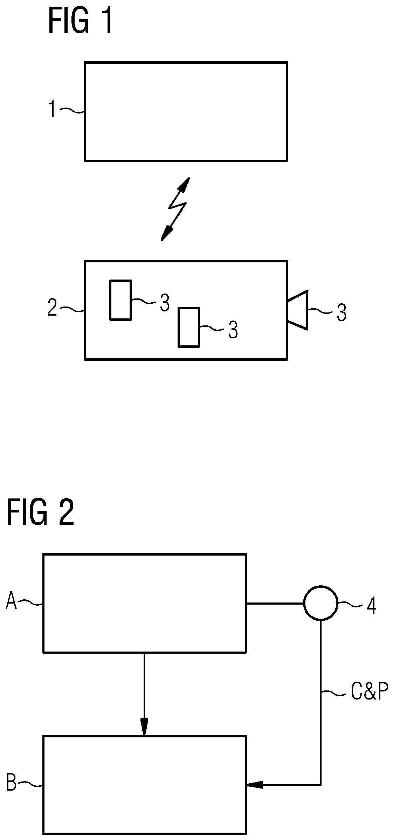

FIG. 1 zeigt Blockschaltbild eines Systems mit einer Engineeringvorrichtung 1 einer industriellen Anlage, die in Datenverbindung mit einem mobilen Endgerät 2 steht. Das mobile Endgerät 2 kann zum Beispiel ein Smartphone oder ein Tablet Computer sein. Die Engineeringvorrichtung 1 umfasst im Wesentlichen eine Recheneinheit mit Speicher. In einer Datenbank der Engineeringvorrichtung 1 sollen die Komponenten und Zustände der industriellen Anlage beispielsweise als CAD Files, gespeichert werden. Änderungen an den Daten der Datenbank und die Erfassung von Altanlagen werden mit Hilfe des mobilen Endgeräts 2 und deren Sensoreinheiten 3 vorgenommen. Dazu werden zum Beispiel ergänzte Komponenten bildlich aufgenommen und lage- und positionsgenau mittels der Copy & Paste Operation in die Engineeringumgebung eingefügt.

FIG. 2 zeigt ein schematisches Ablaufdiagramm eines prinzipiellen Ausführungsbeispiels eines Verfahrens zur Aktualisierung einer Engineeringvorrichtung 1 einer industriellen Anlage, beispielsweise einer Produktionsanlage oder eines Kraftwerks. In einem Schritt A werden durch eine Sensoreinheiten 3 eines mobiles Endgeräts 2 berührungslos Informationen 4 von und über die industrielle Anlage erfasst. Mittels einer Copy & Paste Operation C & P werden die Informationen 4 oder auch die durch das mobile Endgerät 2 aufbereitete Informationen von dem mobilen Endgerät 2 zu der Engineeringvorrichtung 1 übertragen
In einem Schritt B ist die Engineeringvorrichtung 1 in einem Zustand versetzt, der das logische Ziel der Informationen 4 der Copy & Paste Operation C & P bestimmt, wobei die Informationen 4 oder die aufbereiteten Informationen derart ausgebildet oder aufbereitet sind, dass die Informationen 4 in eine Datenbank der Engineeringvorrichtung 1 einpflegt werden können.

Unter Zuhilfenahme von Künstlicher Intelligenz und Maschinellem Lernen können aus den Sensorinformationen des mobilen Endgeräts 2 folgende Informationen 4 extrahiert werden:
- Es können einzelne Komponenten einer Industrieanlage identifiziert werden (Typ, Instanz oder Typ und Instanz)
- Es können die Verbindungen zwischen Komponenten identifiziert werden (z.B. an welchen Anschluss einer Pumpe ist ein Rohr angeschlossen)
- Es kann der aktuelle Zustand von Komponenten und Verbindungen erfasst werden (z.B. die Temperatur eines Motorgehäuses, die Drehzahl eines beweglichen Teils durch Aufnahme und Auswertung eines Hochfrequenz-Videos, die Ausstoßquote von Werkstücken)

Im Gegensatz zu einer herkömmlichen Funktion zur Datensynchronisierung verfügt die Copy & Paste Operation C & P über folgende Merkmale:
- Das Zielsystem, also die Engineeringvorrichtung 1, befindet sich in einem definierten Zustand, der das logische Ziel der Copy & Paste Operation C & P bestimmt. Ein Beispiel kann sein: In der Engineeringvorrichtung 1 ist eine ausgewählte Ansicht auf eine Industrieanlage geöffnet und in dieser Ansicht ist z.B. durch Zoom- und Verschiebeoperationen ein ausgewählter Teil der Industrieanlage sichtbar. Dieser Teil ist das Ziel der Copy & Paste Operation C & P.
- Die Copy & Paste Operation C & P wird üblicherweise auf dem mobilen Endgerät angestoßen und befindet sich zum Zwecke der Durchführung der Copy & Paste Operation C & P in der Nähe eines Computers auf dem die Engineeringvorrichtung ausgebildet ist.
- Bevorzugt erfolgt eine Vorverarbeitung der Sensordaten auf dem mobilen Endgerät 2. Ein Beispiel kann sein: Aus den Sensordaten einer Kamera werden Bilder oder Videos berechnet und mit Hilfe von Freistellungstechniken Bildelemente separiert. Zu diesem Zweck kann optional das mobile Endgerät auch außerhalb des mobilen Endgeräts liegende Speicher- und Rechenkapazitäten (Cloud Computing) verwenden.
- Vorteilhaft ist, dass die Copy & Paste Operation C & P über zwei Endgeräte (mobiles Endgerät 2 und Engineeringvorrichtung 1) hinweg erfolgt. Im Stand der Technik bezeichnet Copy & Paste das Übertragen von Informationen zwischen zwei Anwendungsfenstern auf demselben Rechner mittels Tastatur oder Maus.

Die Erfindung kann folgende Ausgestaltungen annehmen:
- Optional können Drittsysteme herangezogen werden, um Typ- und Instanzeninformationen von Komponenten einer Industrieanlage zu integrieren.
- Die Integration der Sensorinformationen des mobilen Endgeräts mit der Engineeringvorrichtung kann an folgenden Orten erfolgen:
   ∘ Dem mobilen Endgerät
   ∘ Computern, auf denen die Engineering- und Simulationsumgebungen laufen
   ∘ Teilweise auf dem mobilen Endgerät und teilweise auf Computern, auf denen die Engineering- und Simulationsumgebungen laufen
- Die Engineeringvorrichtung 1 kann anzeigen, welche Komponenten und Verbindungen noch nicht mit der aktuellen Realität überprüft worden sind, und diese Information an das mobile Endgerät 2 übermitteln. Der Benutzer des mobilen Endgeräts 2 kann mit diesen Informationen gezielt Sensoraufnahmen von bestimmten Teilen einer Industrieanlage machen (z.B. Bild von einem Teil einer Industrieanlage um bestimmte Komponenten und ihre Verbindungen zu erkennen sowie Detailaufnahme einer Komponente um mit Hilfe eines Typschildes eine Komponente genau zu identifizieren)
- Alternativ kann die Copy & Paste Operation C & P auch von der Engineeringvorrichtung 1 aus angestoßen werden

Der Ablauf des Verfahrens kann bei einer älteren, schon bestehenden industriellen Anlage (brown field) folgendermaßen aussehen:
1. Der Benutzer des mobilen Endgeräts 2 geht durch die Industrieanlage und nimmt von der industriellen Anlage Sensorinformationen auf (Bild, Video, Ortsinformationen, Temperatur, etc.).
2. Mit Hilfe der Copy & Paste Operation C & P werden die Sensorinformationen in eine Engineeringvorrichtung 1 übertragen.
3. Die Sensorinformationen werden ausgewertet, analysiert, korreliert und ggfs. mit Informationen aus Drittsystemen (= weitere System) ergänzt.
4. Die Engineeringvorrichtung 1 erzeugt ein digitales Abbild der realen Industrieanlage.
5. Optional zeigt die Engineeringvorrichtung 1 an, welche Informationen noch fehlen bzw. nicht hinreichend genau sind.
6. Optional erfasst der Benutzer des mobilen Endgeräts 2 die noch fehlenden Informationen und fährt fort mit Schritt 2 oben.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Engineeringvorrichtung
- 2: Mobiles Endgerät
- 3: Sensoreinheit
- 4: Informationen

- A: Erfassung von Information
- B: Einpflegen in die Datenbank
- C&P: Copy & Paste Operation

## Patentansprüche

1. Verfahren zur Aktualisierung von Daten einer Engineeringvorrichtung (1) einer industriellen Anlage, **dadurch gekennzeichnet,**
**dass** durch mindestens eine Sensoreinheit (3) eines mobiles Endgeräts (2) berührungslos Informationen (4) von und über die industrielle Anlage erfasst werden und mittels einer Copy & Paste Operation (C & P) die Informationen (4) und/oder die durch das mobile Endgerät (2) aufbereitete Informationen von dem mobilen Endgerät (2) zu der Engineeringvorrichtung (1) übertragen werden, wobei die Engineeringvorrichtung (1) in einem Zustand versetzt ist, der das logische Ziel der Informationen (4) der Copy & Paste Operation (C & P) bestimmt und wobei die Informationen (4) und/oder aufbereiteten Informationen derart ausgebildet sind, dass sie in die Daten einpflegbar sind.

2. Verfahren nach Anspruch 1, **dadurch gekennzeichnet,**
**dass** die Informationen (4) und/oder die aufbereiteten Informationen (4) in der Engineeringvorrichtung (1) ausgewertet, analysiert und mit in den Daten vorhandenen weiteren Informationen korreliert werden.

3. Verfahren nach Anspruch 2, **dadurch gekennzeichnet,**
**dass** die weiteren Informationen zumindest teilweiseaus aus einem Drittsystem bereitgestellt sind.

4. Verfahren nach einem der vorhergehenden Ansprüche, **dadurch gekennzeichnet,**
**dass** durch die Engineeringvorrichtung (1) aus den Informationen (4) und/oder aufbereiteten Informationen ein digitales Abbild der industriellen Anlage erzeugt wird.

5. Verfahren nach einem der vorhergehenden Ansprüche, **dadurch gekennzeichnet,**
**dass** die Engineeringvorrichtung (1) dem mobilen Endgerät (2) übermittelt, welche Informationen (4) der industriellen Anlage noch fehlen oder nicht hinreichend genau vorhanden sind.

6. Verfahren nach einem der vorherigen Ansprüche, durch gekennzeichnet,
dass das Aufbereiten der Informationen (4) in dem mobilen Endgerät (2) durch eine künstliche Intelligenz erfolgt.

7. System aufweisend eine Engineeringvorrichtung (1) einer industriellen Anlage, **dadurch gekennzeichnet** durch:
- ein mobiles Endgerät (2) mit mindestens eine Sensoreinheit (3), die eingerichtet ist, berührungslos Informationen (4) von und über die industrielle Anlage zu erfassen,
- wobei das mobile Endgerät (2) eingerichtet ist, mittels einer Copy & Paste Operation (C & P) die Informationen (4) und/oder die durch das mobile Endgerät (2) aufbereitete Informationen von dem mobilen Endgerät (2) zu der Engineeringvorrichtung (1) zu übertragen, wobei die Engineeringvorrichtung (1) eingerichtet ist, in einem Zustand versetzt zu werden, der das logische Ziel der Informationen der Copy & Paste Operation (C & P) bestimmt, und
- wobei die Informationen (4) und/oder aufbereiteten Informationen derart ausgebildet sind, dass sie in Daten der Engineeringvorrichtung (1) einpflegbar sind.

8. System nach Anspruch 7, **dadurch gekennzeichnet,**
**dass** die Engineeringvorrichtung (1) eingerichtet ist, die Informationen (4) auszuwerten, zu analysieren und mit in den Daten vorhandenen weiteren Informationen zu korrelieren.

9. System nach Anspruch 8, **dadurch gekennzeichnet,**
**dass** die weiteren Informationen zumindest teilweiseaus aus einem Drittsystem bereitstellbar sind.

10. System nach einem der Ansprüche 7 bis 9, **dadurch gekennzeichnet,**
**dass** die Engineeringvorrichtung (1) eingerichtet ist, aus den Informationen (4) und/oder den aufbereiteten Informationen ein digitales Abbild der industriellen Anlage zu erzeugen.

11. System nach einem der Ansprüche 7 bis 10, **dadurch gekennzeichnet,**
**dass** die Engineeringvorrichtung (1) eingerichtet ist, dem mobilen Endgerät (2) zu übermitteln, welche Informationen (4) der industriellen Anlage noch fehlen oder nicht hinreichend genau vorhanden sind.

12. System nach einem der Ansprüche 7 bis 11, **dadurch gekennzeichnet,**
**dass** das mobile Endgerät (2) als Smartphone oder ein Tablet Computer ausgebildet ist und die Sensoreinheit (3) eingerichtet ist, Bild, Video, Orts- und Lageinformationen, Temperatur, Abstände, Staubkonzentration, Feuchtigkeit oder Luft-Undichtigkeit aufzunehmen.

13. System nach einem der Ansprüche 7 bis 12, **dadurch gekennzeichnet,**
**dass** die Daten in einer Datenbank gespeichert sind.
